# FASCICULE DE BREVET EUROPEEN

(11) **EP 1 890 177 B1**
(45) Date de publication et mention de la délivrance du brevet: **18.11.2009**
(21) Numéro de dépôt: 07113076.9
(22) Date de dépôt: 25.07.2007
(51) Int. Cl.: G02B 7/192, B64G 1/66

(54) **Dispositif de fixation d'un miroir vitrocéramique ou céramique sur une structure embarquée à bord d'un engin spatial fonctionnant à température cryogénique**
Vorrichtung zur Befestigung eines Glaskeramik- oder Keramikspiegels auf einer Struktur, die an Bord eines Raumflugkörpers untergebracht ist und die bei Tieftemperatur funktioniert
Device for fixing a vitroceramic or ceramic mirror to a structure fitted on board a spacecraft operating at cryogenic temperature

(30) Priorité: 25.07.2006 FR 0653102
(43) Date de publication de la demande: 20.02.2008
(73) Titulaire: Thales, 92200 Neuilly Sur Seine (FR)
(72) Inventeur: Lasic, Thierry, 06210, MANDELIEU LA NAPOULE (FR)
(74) Mandataire: Esselin, Sophie

(56) Documents cités:
- EP-A- 0 376 840
- WO-A-99/26092
- FR-A- 2 761 486
- US-A- 4 763 991
- US-A- 5 076 700
- US-A- 5 917 644

## Description

Le domaine de l'invention est celui des miroirs embarqués à bord d'engins spatiaux de type satellite d'observation. Pour ce type d'application, certaines missions impliquent d'avoir des télescopes fonctionnant à des températures cryogéniques de l'ordre de 100° K, dans un domaine de longueurs d'onde visibles. Les optiques, notamment les grands miroirs primaires, sont généralement en vitrocéramique ou céramique et plus précisément en Zérodur, verre de la société Schott qui présente le grand intérêt d'avoir un coefficient de dilatation thermique extrêmement faible.

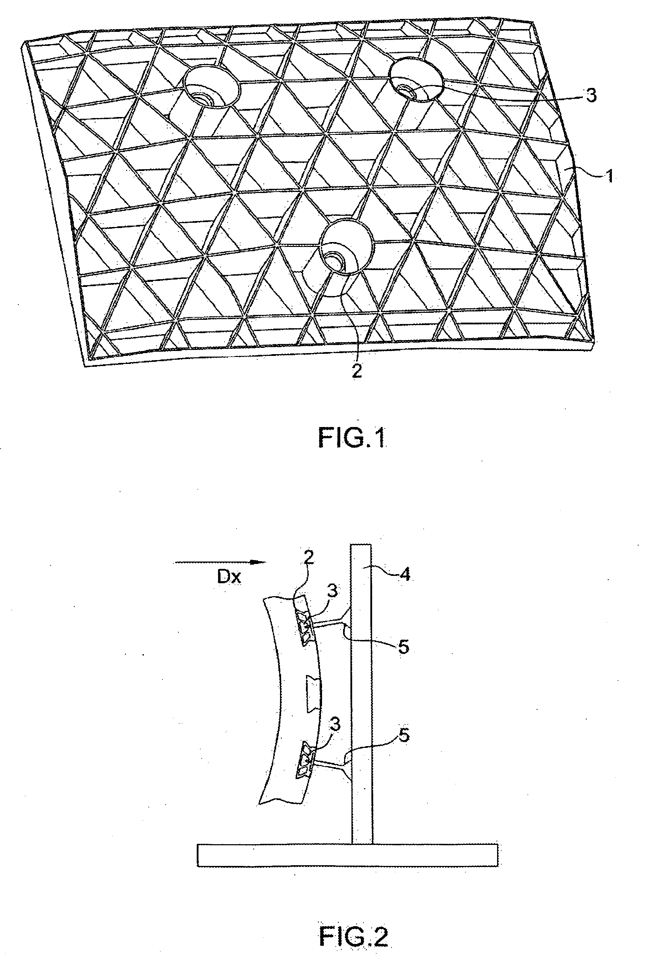

Les miroirs embarqués de grandes dimensions pouvant typiquement être des structures d'envergure supérieure à 1 mètre et d'épaisseur de l'ordre de quelques centimètres, ils subissent de fortes variations de température lors du fonctionnement opérationnel (en orbit) et de très fortes contraintes mécaniques lors de la phase de lancement depuis le sol jusqu'à leur station dans l'espace. La figure 1 illustre un exemple de miroir en Zerodur 1, structure ultra légère de l'ordre de 36kg/m² comportant trois points de fixation 3 insérés dans des alvéoles 2 d'une structure alvéolaire permettant une réduction de poids embarqué.

Le miroir 1 comprenant une surface alvéolaire est généralement fixé sur une structure telle que celle illustrée en figure 2 comportant une structure support (panneau ou cadre) 4 pouvant notamment être en fibre de carbone. Il peut être fixé à cette structure support par l'intermédiaire de dispositifs de fixation 3 du miroir pouvant avantageusement être au nombre de trois (support isostatique) et comportant des moyens 5 de fixation/liaison de ces dits dispositifs sur le panneau support (pièces raides sur 2 axes et souples sur toutes les autres composantes).

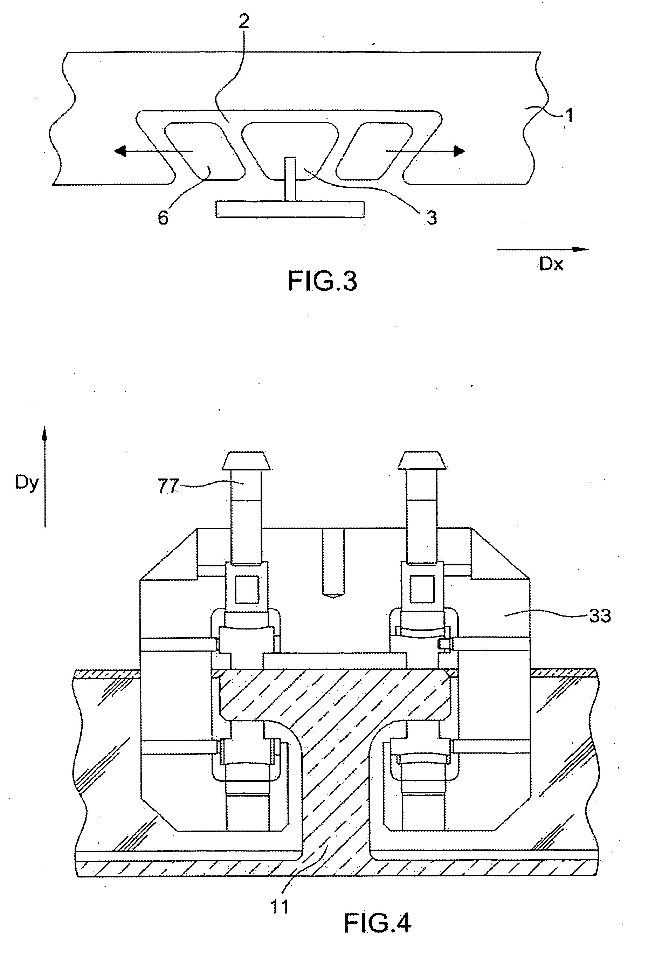

La figure 3 illustre un dispositif de fixation mécanique selon l'art connu permettant de fixer le miroir au panneau support. A l'intérieur d'au moins une alvéole et en l'occurrence trois (si le miroir est fixé en trois points), le dispositif de fixation 3 comprend une pièce conique qui exerce une pression sur deux patins 6 selon une direction Dx parallèle au plan du miroir. L'inconvénient de ce type de dispositif de fixation réside dans les contraintes exercées au sein du verre, qui sont dans le cas présent, exercées en traction et surtout largement en flexion alors que la résistance notamment de la vitrocéramique à ce type de contraintes n'est pas très élevée. Le problème est d'autant plus crucial que le dispositif de fixation doit permettre de supporter les charges de vibration inhérentes à la phase de lancement.

Le document US 5917644 montre un dispositif de fixation de miroir mettant en oeuvre des contraintes de compression.

Dans ce contexte, la présente invention propose un dispositif de fixation mettant en oeuvre des contraintes de type compression pure, c'est-à-dire dans une direction perpendiculaire à la direction Dx, la résistance du verre à ce type de contraintes étant bien meilleure que la résistance du verre aux contraintes de traction ou de cisaillement.

Plus précisément l'invention a pour objet un assemblage comportant un miroir en vitrocéramique ou céramique et un dispositif de fixation du miroir sur une structure embarquée à bord d'un engin spatial, ledit miroir comportant une structure alvéolaire, caractérisé en ce qu'au moins une alvéole comportant une excroissance de verre présentant une partie intermédiaire dans une direction perpendiculaire au plan du miroir depuis la base de l'alvéole et une partie terminale appelée talon, perpendiculaire à ladite partie intermédiaire (le talon) de manière à constituer une excroissance en forme de T, ledit dispositif comprend une pièce de serrage venant pincer la partie terminale de l'excroissance (le talon) selon une direction parallèle à la partie intermédiaire et des moyens de fixation de ladite pièce de serrage sur la structure embarquée.

Les avantages du dispositif selon l'invention résident notamment dans le fait de supporter les charges de vibration dues au lancement (à température ambiante) et ensuite, en fonctionnement à froid, de libérer les tensions afin de limiter au maximum les déformations induites au niveau de la face active du miroir.

Selon une variante de l'invention, la pièce de serrage comprend une ouverture principale de même forme que l'excroissance de verre (le bloc principal).

Selon une variante de l'invention, la pièce de serrage comprend en outre des secondes ouvertures selon une direction parallèle à la partie intermédiaire de l'excroissance, lesdites ouvertures étant équipées de vis pour bloquer la pièce de serrage contre l'excroissance de verre.

Selon l'invention, le dispositif de fixation comprend en outre des patins pour assurer le contact entre la partie terminale de l'excroissance (le talon) et la pièce de serrage.

Avantageusement, il peut comprendre deux séries de patins en contact avec chacune des surfaces de la partie terminale de l'excroissance

Selon l'invention, les patins comprennent une première partie en contact avec la partie terminale de l'excroissance présentant une face plane et une face convexe et une seconde partie présentant une face concave complémentaire à celle de la première partie (réalisant ainsi une tête pivotante) :
Selon une variante de l'invention, les patins sont réalisés dans un matériau à fort coefficient de dilatation thermique type aluminium.
Selon une variante de l'invention, la pièce de serrage est réalisée en un matériau à très faible coefficient de dilatation thermique de type alliage fer nickel de type Invar (Sté Goodfellow).
Selon une variante de l'invention, la surface des patins en contact avec la partie terminale de l'excroissance comprend en outre une couche de matériau tendre de type or permettant d'améliorer le contact par rapport aux états de surface et donc d'homogénéiser les contraintes. Avantageusement, la pièce de serrage peut comprendre en outre des cellules de force entre les vis et les patins.
Selon une variante de l'invention, la pièce de serrage comprend en outre des troisièmes ouvertures selon une direction perpendiculaire à celle des secondes ouvertures et pouvant recevoir des vis de maintien au montage, en contact avec les patins.
Selon une variante de l'invention, la pièce de serrage comprend des quatrièmes ouvertures destinées à recevoir des moyens pour fixer ladite pièce de serrage sur la structure embarquée.

L'invention sera mieux comprise à la lecture de la description qui va suivre donnée à titre non limitatif et grâce aux figures annexées parmi lesquelles :
- la figure 1 illustre un exemple de miroir spatial selon l'art connu destiné à être fixé sur une structure embarquée ;
- la figure 2 illustre un exemple de l'ensemble embarqué sur un engin spatial comprenant un miroir et une structure de fixation, selon l'art connu ;
- la figure 3 illustre un exemple de dispositif de fixation de miroir selon l'art connu ;
- la figure 4 illustre un exemple de dispositif de fixation sur un miroir selon l'invention;
- les figures 5a, 5b et 5c illustrent respectivement une vue en perspective, en coupe et de dessus de l'exemple du dispositif montré en figure 4;
- les figures 6a et 6b illustrent deux exemples de moyens de fixation du dispositif de fixation selon l'invention, sur une structure embarquée à bord d'un engin spatial ;
- la figure 7 illustre une vue éclatée des patins utilisés dans un exemple de dispositif de fixation selon l'invention.

Selon l'invention, le miroir destiné à être fixé à une structure embarquée à bord d'un engin spatial comporte une structure allégée alvéolaire. L'interface du miroir avec le dispositif de fixation est constituée par des excroissances de verre comportant chacune une partie intermédiaire et une partie terminale en forme de talon. Les deux ailes de ce talon sont prises « en pincette » par une pièce de serrage comportant des vis. Les efforts de serrage ne créent que des contraintes de compression dans le verre selon une direction Dy perpendiculaire au talon, illustré en figure 4 qui montre de manière schématique une excroissance de verre 11, prise dans la pièce de serrage 33, comportant des vis de serrage 77.

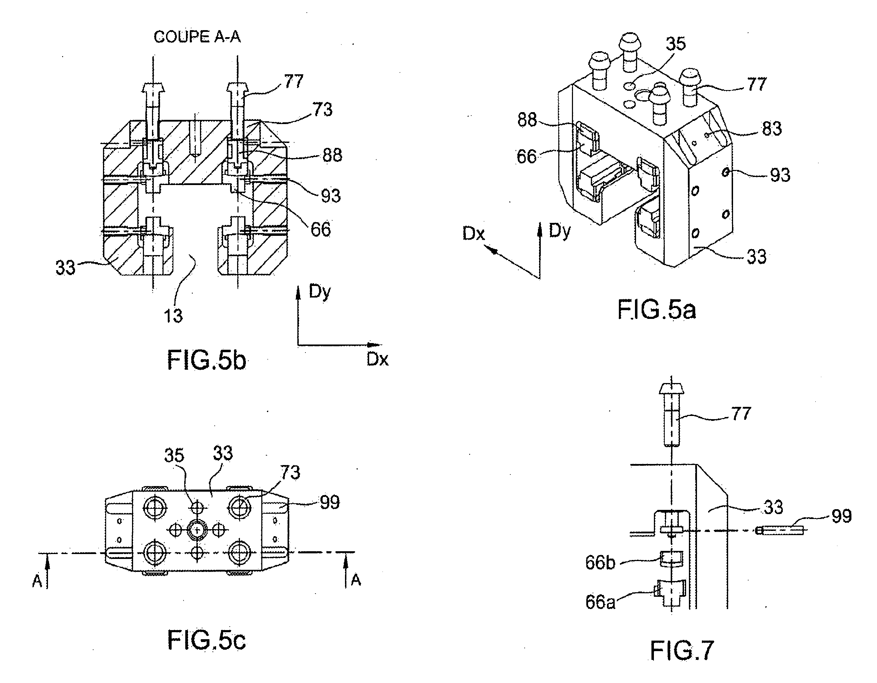

Nous allons décrire ci-après plus en détails le dispositif de fixation comprenant les vis de serrage 77 insérées dans la pièce de serrage 33 et illustré en figures 5a, 5b et 5c. Plus précisément, la pièce de serrage 33 comporte une ouverture principale 13 dans laquelle on peut venir introduire (en glissant suivant axe Z) l'excroissance de verre. Elle comporte également des secondes ouvertures 73 selon une direction Dy perpendiculaire au plan du miroir et destinées à recevoir les vis de serrage 77.

Ce dispositif de fixation comporte des patins 66 destinés à venir assurer le contact entre la pièce de serrage et la pièce en verre et sont utiles pour répartir les contraintes. Plus précisément deux séries de patins sont à être en contact avec les deux faces de la partie terminale du talon.

Par ailleurs, les secondes ouvertures peuvent également comprendre des cellules de force 88, permettant de connaître précisément l'effort appliqué et par suite de maîtriser les contraintes lors du serrage des vis, préalablement à la phase de lancement dans l'espace. Typiquement il peut s'agir de cylindre métallique équipé de jauges de contrainte et étalonné au préalable.

Afin de faciliter la phase d'intégration du système, il est également prévu selon la variante décrite, des troisièmes ouvertures 93 selon une direction Dx parallèle au plan du miroir, permettant l'introduction de vis 99 venant buter contre les patins : blocage des patins lors de la mise en place avant le serrage des vis 77. Les vis 93 doivent être desserrées lors du serrage des vis 77 et en fonctionnement opérationnel.

Grâce à l'ensemble de ces paramètres de serrage, les charges mécaniques (de vibration) à température ambiante sont reprises axialement par butée positive et tangentiellement par frottement. A température cryogénique, on annule les efforts de serrage en jouant sur les épaisseurs et les coefficients de dilatation thermoélastique qui rentrent dans l'assemblage réalisant le serrage. Une tension minimum est visée pour juste maintenir le miroir en opérationnel sans injecter d'effort susceptible de déformer la face active.

Par ailleurs, la pièce de serrage comprend des quatrièmes ouvertures, par exemple quatre ouvertures 35, destinées à coopérer avec des moyens pour fixer cette pièce de serrage sur la structure embarquée.

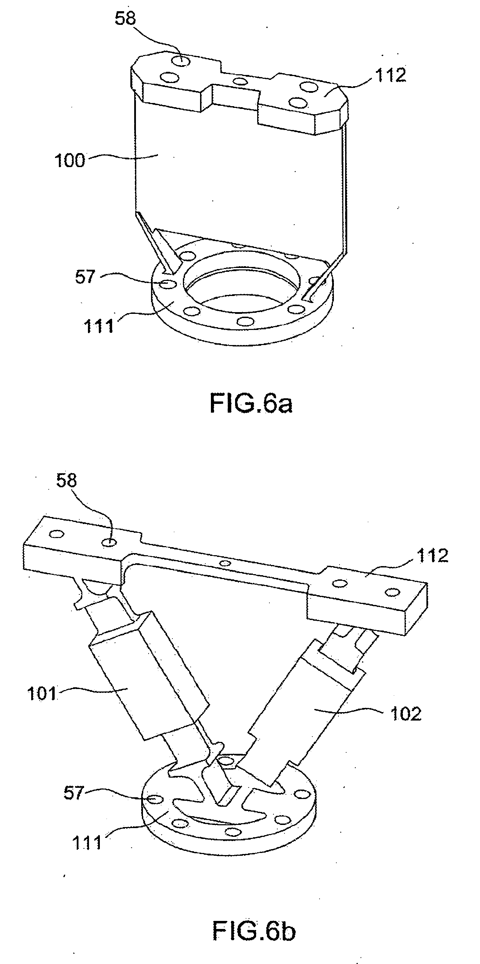

Typiquement ces moyens de fixation peuvent être par exemple ceux illustrés en figure 6a ou figure 6b. Il s'agit de moyens de fixation dits respectivement de type à lames 100 ou de type "forme en A'' couple de lames 101 et 102 comprises entre une première base 111 et une seconde base 112 et comportant des ouvertures. Via des septièmes ouvertures 57 (trous de passage de vis) de la base 111, on peut venir introduire des vis destinées à venir être vissées dans les quatrièmes ouvertures de la pièce de serrage. Via des huitièmes ouvertures 58 (idem) de la seconde base 112 on peut introduire des vis destinées à venir être vissées sur la structure embarquée correspondant au panneau 4 de la figure 2.

### Exemple de réalisation d'un dispositif de fixation d'un miroir selon l'invention.

Le dispositif comprend une pièce de serrage en matériau métallique de faible coefficient de dilatation thermique. Par exemple l'Invar possède un coefficient faible de l'ordre 1,5 ppm/°K et est particulièrement adapté à ce type d'application.

Pour minimiser les contraintes auxquelles est soumis le miroir, le dispositif de fixation comprend des patins pouvant avantageusement être en un matériau de type Aluminium.

De plus, ces patins sont avantageusement constitués en deux parties comme illustré en figure 7 qui fournit une vue éclatée des patins utilisés dans le dispositif de l'invention.
- une première partie 66a présente une surface plane destinée à être en contact avec la partie terminale de verre et une surface convexe ;
- une seconde partie 66b comportant une surface concave,
les deux parties coopérant pour permettre d'ajuster le serrage même en présence de défaut d'introduction parallèle, de la partie en verre au sein de la pièce de serrage. Plus précisément,
**les deux parties 66a et 66b sont plaquées entre elles par la pression de la vis**

Pour favoriser encore le contact entre les patins et la pièce en verre, la surface des patins peut avantageusement être recouverte d'une fine couche de matériau tendre type or qui permet de jouer le rôle de joint élastique.

Il est à noter par ailleurs que pour ne pas fragiliser les points de contact du miroir matérialisés par les excroissances de verre, il est important de conférer un bon ratio entre épaisseur et longueur au niveau du talon. Ainsi et avantageusement ces dimensions peuvent être choisies égales à environ 15 mm et 20 mm, de manière à obtenir de bons rapports entre les différentes contraintes auxquelles est soumise la partie terminale de l'excroissance de verre.

## Revendications

1. Assemblage comportant un miroir vitrocéramique ou céramique et un dispositif de fixation du miroir sur une structure embarquée à bord d'un engin spatial, ledit miroir comportant une structure alvéolaire, **caractérisé en ce qu'**au moins une alvéole comporte une excroissance de verre (11) présentant une partie intermédiaire dans une direction perpendiculaire (Dy) au plan du miroir depuis la base de l'alvéole et une partie terminale perpendiculaire à ladite partie intermédiaire de manière à constituer une excroissance en forme de T, **en ce que** ledit dispositif de fixation comprend une pièce de serrage (33) venant pincer la partie terminale de l'excroissance selon une direction parallèle à la partie intermédiaire et des moyens de fixation (5) de ladite pièce de serrage sur la structure embarquée et **en ce qu'**il comprend en outre des patins (66) pour assurer le contact entre la partie terminale de l'excroissance et la pièce de serrage, les patins comprenant une tête pivotante constituée d'une première partie (66a) en contact avec la partie terminale de l'excroissance présentant une face plane et une face convexe et d'une seconde partie (66b) présentant une face concave complémentaire à celle de la première partie, réalisant ainsi une tête pivotante.

2. Assemblage selon la revendication 1, **caractérisé en ce que** la pièce de serrage comprend une ouverture principale (13) de même forme que l'excroissance de verre.

3. Assemblage selon la revendication 2, **caractérisé en ce que** la pièce de serrage comprend en outre des secondes ouvertures (73) équipées de vis (77) pour bloquer la pièce de serrage contre l'excroissance de verre.

4. Assemblage selon l'une des revendications 1 à 3, **caractérisé en ce que** les patins sont réalisés dans un matériau à coefficient de dilatation thermique fort de type Aluminium.

5. Assemblage selon l'une des revendications 1 à 4, **caractérisé en ce que** la pièce de serrage est réalisée en un matériau à faible coefficient de dilatation thermique de type Invar.

6. Assemblage selon l'une des revendications 1 à 5, **caractérisé en ce que** la surface des patins en contact avec la partie terminale de l'excroissance comprend en outre une couche de matériau tendre de type or permettant d'améliorer le contact par rapport aux états de surface et donc d'homogénéiser les contraintes.

7. Assemblage selon l'une des revendications 1 à 6, **caractérisé en ce que** la pièce de serrage comprend en outre des cellules de force (88) entre les vis et les patins.

8. Assemblage selon l'une des revendications 6 ou 7, **caractérisé en ce que** la pièce de serrage comprend en outre des troisièmes ouvertures (93) selon une direction perpendiculaire à celle des premières ouvertures primaires et pouvant recevoir des vis de maintien des patins au montage (99).

9. Assemblage selon l'une des revendications 1 à 8, **caractérisé en ce que** la pièce de serrage comprend des quatrièmes ouvertures (35) destinées à recevoir des moyens (5) pour fixer ladite pièce de serrage sur la structure embarquée.

10. Structure embarquée à bord d'un engin spatial comportant au moins un assemblage selon l'une quelconque des revendications précédentes.

## Claims

1. Assembly comprising a vitroceramic or ceramic mirror and a device for fixing the mirror to a structure fitted on board a spacecraft, said mirror having a cellular structure, the assembly being **characterized in that** at least one cell has a glass protrusion (11) with an intermediate part in a direction (Dy) perpendicular to the plane of the mirror from the base of the cell and a terminal part perpendicular to said intermediate part in such a way as to create a T-shaped protrusion, **in that** said fixing device comprises a clamping component (33) that grips the terminal part of the protrusion in a direction parallel to the intermediate part and fixing means (5) for fixing said clamping component to the on-board structure, and **in that** it also comprises feet (66) for creating contact between the terminal part of the protrusion and the clamping component, the feet comprising a pivoting head consisting of a first part (66a) in contact with the terminal part of the protrusion having a planar face and a convex face, and a second part (66b) having a concave face which fits the face of the first part, thus creating a pivoting head.

2. Assembly according to Claim 1, **characterized in that** the clamping component comprises a main opening (13) of the same shape as the glass protrusion.

3. Assembly according to Claim 2, **characterized in that** the clamping component also comprises second openings (73) provided with screws (77) for locking the clamping component against the glass protrusion.

4. Assembly according to one of Claims 1 to 3, **characterized in that** the feet are made of a material with a high coefficient of thermal expansion, such as aluminium.

5. Assembly according to one of Claims 1 to 4, **characterized in that** the clamping component is made of a material with a low coefficient of thermal expansion, such as Invar.

6. Assembly according to one of Claims 1 to 5, **characterized in that** the surface of the feet in contact with the terminal part of the protrusion also comprises a layer of soft material such as gold to improve the contact compared with the surface states and hence equalize the stresses.

7. Assembly according to one of Claims 1 to 6, **characterized in that** the clamping component also comprises load cells (88) between the screws and the feet.

8. Assembly according to either of Claims 6 and 7, **characterized in that** the clamping component also comprises third openings (93) in a direction perpendicular to that of the first or primary openings and able to receive screws for holding the feet on the mounting (99) .

9. Assembly according to one of Claims 1 to 8, **characterized in that** the clamping component comprises fourth openings (35) designed to take means (5) for fixing said clamping component to the on-board structure.

10. Structure on board a spacecraft comprising at least one assembly according to any one of the preceding claims.

## Patentansprüche

1. Anordnung, die einen Glaskeramikspiegel oder Keramikspiegel und eine Vorrichtung zur Befestigung des Spiegels an einer an Bord eines Raumfahrzeugs befindlichen Struktur aufweist, wobei der Spiegel eine Zellenstruktur aufweist, **dadurch gekennzeichnet, dass** mindestens eine Zelle einen Glasvorsprung (11) aufweist, der einen Zwischenbereich in einer Richtung lotrecht (Dy) zur Ebene des Spiegels ausgehend von der Basis der Zelle und einen Endbereich lotrecht zum Zwischenbereich hat, um einen Vorsprung in Form eines T zu bilden, dass die Befestigungsvorrichtung ein Klemmteil (33), das den Endbereich des Vorsprungs gemäß einer Richtung parallel zum Zwischenbereich einklemmt, und Einrichtungen (5) zur Befestigung des Klemmteils an der an Bord befindlichen Struktur enthält, und dass sie außerdem Klötze (66) aufweist, um den Kontakt zwischen dem Endbereich des Vorsprungs und dem Klemmteil zu gewährleisten, wobei die Klötze einen Schwenkkopf enthalten, der aus einem ersten Teil (66a) in Kontakt mit dem Endbereich des Vorsprungs, der eine ebene Seite und eine konvexe Seite hat, und aus einem zweiten Teil (66b) bestehen, der eine konkave Seite komplementär zu derjenigen des ersten Teils hat, wodurch ein Schwenkkopf hergestellt wird.

2. Anordnung nach Anspruch 1, **dadurch gekennzeichnet, dass** das Klemmteil eine Hauptöffnung (13) von gleicher Form wie der Glasvorsprung hat.

3. Anordnung nach Anspruch 2, **dadurch gekennzeichnet, dass** das Klemmteil außerdem zweite Öffnungen (73) hat, die mit Schrauben (77) ausgestattet sind, um das Klemmteil gegen den Glasvorsprung zu fixieren.

4. Anordnung nach einem der Ansprüche 1 bis 3, **dadurch gekennzeichnet, dass** die Klötze aus einem Material mit hohem Wärmeausdehnungskoeffizient vom Typ Aluminium hergestellt sind.

5. Anordnung nach einem der Ansprüche 1 bis 4, **dadurch gekennzeichnet, dass** das Klemmteil aus einem Material mit geringem Wärmeausdehnungskoeffizient vom Typ Invar hergestellt ist.

6. Anordnung nach einem der Ansprüche 1 bis 5, **dadurch gekennzeichnet, dass** die Fläche der Klötze in Kontakt mit dem Endbereich des Vorsprungs außerdem eine Schicht aus einem weichen Material von dem Typ aufweist, der eine Verbesserung des Kontakts bezüglich der Oberflächenzustände und somit die Homogenisierung der Spannungen ermöglicht.

7. Anordnung nach einem der Ansprüche 1 bis 6, **dadurch gekennzeichnet, dass** das Klemmteil außerdem Kraftzellen (88) zwischen den Schrauben und den Klötzen aufweist.

8. Anordnung nach einem der Ansprüche 6 oder 7, **dadurch gekennzeichnet, dass** das Klemmteil außerdem dritte Öffnungen (93) in einer Richtung lotrecht zu derjenigen der ersten Primäröffnungen aufweist, die Halteschrauben der Klötze bei der Montage (99) aufnehmen können.

9. Anordnung nach einem der Ansprüche 1 bis 8, **dadurch gekennzeichnet, dass** das Klemmteil vierte Öffnungen (35) aufweist, die dazu bestimmt sind, Einrichtungen (5) zur Befestigung des Klemmteils an der an Bord befindlichen Struktur aufzunehmen.

10. An Bord eines Raumfahrzeugs befindliche Struktur, die mindestens eine Anordnung nach einem der vorhergehenden Ansprüche aufweist.
